(19) **Europäisches Patentamt**
**European Patent Office**
**Office européen des brevets**

(11) **EP 1 910 233 B1**

(12) **FASCICULE DE BREVET EUROPEEN**

(45) Date de publication et mention
de la délivrance du brevet:
**27.03.2013 Bulletin 2013/13**

(51) Int Cl.:
*C02F 1/00* (2006.01)     *C02F 3/30* (2006.01)
*C02F 3/12* (2006.01)

(21) Numéro de dépôt: **06794236.7**

(22) Date de dépôt: **27.07.2006**

(86) Numéro de dépôt international:
**PCT/FR2006/001841**

(87) Numéro de publication internationale:
**WO 2007/014994 (08.02.2007 Gazette 2007/06)**

(54) **PROCÉDÉ ET INSTALLATION DE TRAITEMENT D'EFFLUENTS CONCENTRÉS EN AZOTE DANS UN RÉACTEUR BIOLOGIQUE SÉQUENTIEL À CYCLES FRACTIONNÉS**

**VERFAHREN UND ANORDNUNG ZUR VERARBEITUNG STICKSTOFFKONZENTRIERTER ABGASE IN EINEM SEQUENZIELLEN BIOLOGISCHEN REAKTOR MIT FRAKTIONIERTEM ZYKLUS**

**METHOD AND ARRANGEMENT FOR PROCESSING NITROGEN-CONCENTRATED EFFLUENTS IN A SEQUENTIAL FRACTIONATED CYCLE BIOLOGICAL REACTOR**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.08.2005 FR 0508201**

(43) Date de publication de la demande:
**16.04.2008 Bulletin 2008/16**

(73) Titulaires:
• **Suez Environnement**
**75008 Paris (FR)**
• **DEGREMONT**
**92500 Rueil-Malmaison (FR)**

(72) Inventeurs:
• **MARTIN, Samuel**
**F-75011 Paris (FR)**

• **GONZALEZ OSPINA, Adriana**
**F-78230 Le Pecq (FR)**

(74) Mandataire: **Michardière, Bernard et al**
**Cabinet Armengaud Aîné**
**3, Avenue Bugeaud**
**75116 Paris (FR)**

(56) Documents cités:
**WO-A-00/05176     FR-A- 2 558 460**

• **DATABASE COMPENDEX [Online] ENGINEERING INFORMATION, INC., NEW YORK, NY, US; FUX C ET AL: "Nitrogen removal from digester supernatant via nitrite - SBR or SHARON?" XP002383311 Database accession no. E2004017803276 cité dans la demande & WATER SCI. TECHNOL.; WATER SCIENCE AND TECHNOLOGY 2003, vol. 48, no. 8, 2003, pages 9-18,**

EP 1 910 233 B1

**Description**

L'invention concerne un procédé de traitement d'effluents concentrés en azote, mettant en oeuvre une oxydation d'ammonium en nitrites suivie d'une dénitritation des nitrites en azote gazeux dans un réacteur biologique séquentiel dont les phases de réaction sont fractionnées, procédé selon lequel un volume d'affluent à traiter est versé dans le réacteur contenant des bactéries nitrifiantes, les conditions de fonctionnement étant prévues pour privilégier l'action des bactéries nitritantes et inhiber au maximum l'action des bactéries nitratantes , comprenant des cycles de traitement avec au moins une phase d'aération pour provoquer la nitrification, suivie d'une phase où l'aération est arrêtée et une source de carbone est introduite dans le réacteur pour la transformation des nitrites en azote.

L'invention concerne plus particulièrement le traitement d'effluents dont la concentration en azote est supérieure à 100 mg N/l.

Traitement de l'azote d'effluents concentrés

Beaucoup d'installations de traitement de polluants sont confrontées à des difficultés croissantes en ce qui concerne la maîtrise et le traitement de leurs rejets azotés, principalement ammoniacaux, dans les milieux récepteurs. L'ammoniac est susceptible de provoquer des atteintes environnementales telles que l'appauvrissement en oxygène des milieux aquatiques, une toxicité vis à vis des poissons ou des phénomènes d'eutrophisation. Pour limiter ces impacts, les réglementations imposent des limites de rejet de plus en plus contraignantes qui conduisent souvent à des réhabilitations coûteuses des stations de traitement existantes.

Une des principales voies de traitement de l'azote est le procédé biologique de nitrification / dénitrification, par lequel l'ammonium est oxydé en deux étapes en conditions aérées, d'abord en nitrites puis en nitrates, et est finalement réduit en azote gazeux en conditions anoxies. Dans le cas d'effluents concentrés, il est possible grâce au contrôle de divers paramètres de court-circuiter ce processus biologique en effectuant une nitrification partielle en nitrites, qui sont ensuite directement dénitrifiés. Ce procédé, appelé également « shunt des nitrates » et déjà décrit dans EP-A-826639 et WO 00/05176, est théoriquement capable de réduire de 25% les apports d'oxygène pour la nitrification et de 40% les apports de carbone biodégradable pour la dénitrification, ainsi que la production de boues hétérotrophes associée.

Les stations d'épuration d'eaux usées munies de digesteurs anaérobies produisent des flux concentrés en ammonium (de l'ordre de 1000 mg N/l) dans la ligne de traitement des boues qui, lorsqu'ils sont retournés en tête de l'installation, peuvent représenter jusqu'à 20% de la charge azotée totale. Leur traitement spécifique permettrait donc dans bien des cas d'éviter des réhabilitations coûteuses de la ligne principale de traitement pour respecter les limites de rejet. Par ailleurs, un nombre croissant de sites est contraint de traiter les odeurs ou les effluents gazeux produits, générant des condensats très chargés en formes ammoniacales qu'il devient impératif de minimiser. Finalement, les lixiviats des décharges constituent un troisième type d'effluents pour lesquels l'ion ammonium représente une des principales sources de pollution.

Tous ces effluents contiennent généralement peu de carbone biodégradable, ce qui implique que les dispositifs de traitement biologique peuvent être dimensionnés quasi exclusivement vis à vis du traitement de l'azote. Un traitement biologique du type « shunt des nitrates » permettrait donc des réductions de coût significatives par rapport à une nitrification / dénitrification classique.

Shunt des nitrates en configuration RBS (Réacteur Biologique Séquentiel)

Fux, C., Lange K., Faessler, A., Huber, P., Grueniger, B. and Siegrist, H. (2003), dans un article intitulé "Nitrogen removal from digester supernatant via nitrite-SBR or SHARON?" paru dans la revue Water Science and Technology, Vol. 48 n°8, pp.9-18 (2003) ont montré l'intérêt des réacteurs biologiques séquentiels (RBS), comprenant des phases d'alimentation, de réaction (aération + anoxie), de sédimentation et de soutirage, pour la mise en oeuvre du shunt des nitrates sur des effluents concentrés en azote. En effet, cette configuration RBS permet d'appliquer des charges volumiques importantes par rétention de biomasse dans un même réacteur, à la différence du procédé SHARON (brevet EP-A-826639) pour lequel l'absence de rétention de biomasse permet le lessivage spécifique de la biomasse responsable de l'oxydation des nitrites en nitrates. Selon le procédé RBS de Fux & al. un volume d'affluent à traiter dans un cycle complet est versé dans le réacteur par fractions volumiques successives, le cycle complet de traitement étant divisé en sous-cycles successifs, chaque sous-cycle comprenant une phase d'alimentation par une fraction volumique, puis une phase d'aération pour provoquer la nitrification, puis une phase d'anoxie pendant laquelle l'aération est arrêtée et une source carbonée est introduite dans le réacteur pour la transformation des nitrites en azote.

Pour des rejets tels que les surnageants de digesteurs anaérobies, les condensats de traitement de gaz et les lixiviats de décharge, il est particulièrement difficile d'optimiser les réactions de production et de réduction des nitrites, pour deux raisons principales :

- Ces rejets sont soumis à des variations de débit et de concentration en ammonium très importantes, qui obligent à adapter en permanence les critères d'exploitation pour fournir un effluent de qualité constante.
- Les milieux fortement chargés en sels et composés ioniques divers, tels que ceux visés par l'invention, sont susceptibles d'avoir un effet négatif sur la sensibilité des sondes (contamination des sondes redox par les sulfures notamment) et de provoquer des dérives qui occasionnent un passage rapide en mode temporisé dégradé.

Le développement d'un système de gestion robuste est donc souhaitable pour fiabiliser le traitement de l'azote d'effluents concentrés par shunt des nitrates en réacteur RBS.

La présente invention propose d'éliminer l'azote d'effluents concentrés par un procédé de nitritation /dénitritation dans un réacteur biologique séquentiel (RBS) dont la séquence comprend plusieurs phases alimentation / aération /anoxie fractionnées, le nombre et la durée de ces phases ainsi que l'ajout de réactif carboné étant ajustés grâce à une série de mesures en temps réel dans l'effluent à traiter, dans le rejet et dans le réacteur biologique.

Selon l'invention, le procédé de traitement d'effluents concentrés en azote, du genre défini initialement, et selon lequel un volume d'affluent à traiter dans un cycle complet est versé dans le réacteur par fractions volumiques successives, le cycle complet de traitement étant divisé en sous-cycles successifs, chaque sous-cycle comprenant une phase d'alimentation par une fraction volumique, puis une phase d'aération pour provoquer la nitrification, puis une phase d'anoxie pendant laquelle l'aération est arrêtée et une source carbonée est introduite dans le réacteur pour la transformation des nitrites en azote, est caractérisé en ce que l'on effectue une série de mesures en temps réel dans l'effluent à traiter, dans le rejet et dans le réacteur biologique, l'on évalue la charge volumique azotée à traiter dans l'affluent, et que l'on détermine le nombre de phases d'alimentation d'un cycle complet en fonction de cette charge azotée et du volume minimal de liquide dans le réacteur, selon la formule suivante :

$$\mathrm{Na\,lim}_{min} = \frac{F_{NH4,j}}{([NH_4^+]_{inhib} - [NH_4^+]_{eff}) * V_{min} * N_{RBS}}$$

où,

$\mathrm{Nalim}_{min}$ : nombre minimal de cycles d'alimentation

$F_{NH4,j}$ : charge azotée journalière

$[NH_4^+]_{eff}$ : concentration en ammonium dans l'effluent sortant du réacteur

$V_{min}$ : volume liquide minimal (après extraction et avant alimentation)

$N_{RBS}$ : nombre de cycles complets RBS par jour

$[NH_4^+]_{inhib}$ : concentration en ammonium inhibitrice de la biomasse nitritante ,

de sorte que la concentration en azote de la fraction volumique injectée est diluée dans le volume de liquide demeurant dans le réacteur, ce qui permet d'éviter l'inhibition des bactéries nitritantes, la charge azotée de la fraction volumique étant cependant suffisante pour assurer dans le réacteur un « à coup » ou pic de charge ammoniacale au déversement de chaque fraction, favorable au développement de la biomasse productrice de nitrites.

De préférence, on évalue la charge volumique azotée à traiter dans l'affluent par mesure de la conductivité (X) et du débit (Q) de l'affluent.

De préférence on mesure et contrôle la concentration en oxygène dissous dans le réacteur pour la maintenir à de faibles valeurs en limitant la durée des phases aérées et en adaptant l'apport d'oxygène à la charge à traiter.

On peut déterminer un nombre minimal $\mathrm{Nbiol}_{min}$ de sous-cycles aérobie / anoxie de manière à ne pas dépasser une durée totale de réaction biologique donnée, choisie afin de limiter les oscillations de concentration en oxygène dissous entre 0 et 2mg O2/l.

Le pH dans le réacteur est mesuré et on assure une auto-régulation du pH par alternance de phases rapprochées de nitritation et de dénitritation en limitant les oscillations de pH entre 6.5 et 8.5, de préférence entre 7 et 8.

Des cycles biologiques type « aérobie / anoxie », avec des durées des phases aérées et anoxies fixées sont prédéfinis, et la durée totale tC de ces phases de réaction est calculée en fonction du nombre de cycles NC :

$$tC = (t_{RBS} - t_{alim} - t_{sedim} - t_{extract})/NC$$

où,

$t_{RBS}$ : durée du cycle RBS global

$t_{alim}$ : durée globale de l'alimentation (non fractionnée)

$t_{sedim}$ : durée de la phase de sedimentation

$t_{extract}$ : durée de la phase d'extraction

Le cycle biologique « aérobie / anoxie » effectivement appliqué est celui dont la durée d'aération correspond le mieux à la durée d'aération théorique calculée à partir de la charge entrante, de la configuration du système d'aération du réacteur et de la cinétique de réaction. La durée des phases non aérées est limitée de manière à limiter les risques d'anaérobiose.

Le temps d'injection de la source carbonée pendant la phase non aérée est déterminé à partir des mesures de la charge azotée entrante. De préférence, le rendement d'élimination d'azote est calculé et comparé à un rendement minimal, et que l'injection de source carbonée pendant la phase non aérée est optimisée selon les résultats de la comparaison, en adaptant l'apport de réactif à la charge à traiter.

Le procédé est avantageusement appliqué au traitement de surnageants de digesteurs anaérobies, ou au traitement de condensats de traitement de gaz, ou au traitement de ixiviats de décharge.

L'invention est également relative à une installation de traitement d'effluents concentrés en azote, en particulier contenant plus de 100mg N/l, mettant en oeuvre une oxydation d'ammonium en nitrites suivie d'une dénitritation des nitrites en azote gazeux dans un réacteur biologique séquentiel dont les phases de réaction sont fractionnées, ce réacteur contenant des bactéries nitrifiantes , les conditions de fonctionnement étant prévues pour privilégier l'action des bactéries nitritantes et inhiber au maximum l'action des bactéries nitratantes , un volume d'affluent à traiter dans un cycle complet étant versé dans le réacteur par fractions volumiques successives, le cycle complet de traitement étant divisé en sous-cycles successifs, chaque sous-cycle comprenant une phase d'alimentation par une fraction volumique, puis une phase d'aération pour provoquer la nitritation, puis une phase d'anoxie pendant laquelle l'aération est arrêtée et une source carbonée est introduite dans le réacteur pour la transformation des nitrites en azote, installation caractérisée en ce qu'elle comporte des moyens pour évaluer la charge volumique azotée à traiter dans l'affluent, notamment par une sonde de mesure de la conductivité (X) et par un débitmètre pour mesure du débit (Q) de l'affluent, et un moyen de calcul et de commande du nombre de phases d'alimentation d'un cycle complet en fonction de cette charge azotée et du volume minimal de liquide dans le réacteur, de sorte que la concentration en azote de la fraction volumique injectée est diluée dans le volume de liquide demeurant dans le réacteur, ce qui permet d'éviter l'inhibition des bactéries nitritantes, la charge azotée de la fraction volumique étant cependant suffisante pour assurer dans le réacteur un « à coup » ou pic de charge ammoniacale au déversement de chaque fraction, favorable au développement de la biomasse productrice de nitrites.

L'installation peut comprendre une sonde de mesure de conductivité et un débitmètre dans l'effluent sortant, et différents capteurs dans le réacteur, en particulier des capteurs de conductivité, de concentration en oxygène dissous, de potentiel redox et de pH, toutes ces sondes et capteurs étant reliés au contrôleur pour permettre un suivi en continu de l'évolution du traitement et la commande d'actions correctives.

De préférence, l'installation comprend une source carbonée et une pompe doseuse commandée par le contrôleur pour le temps d'injection de la source carbonée pendant une phase d'anoxie, ce temps d'injection étant déterminé à partir des mesures de la charge azotée entrante.

L'installation comprend des moyens d'aération commandés par le contrôleur selon les mesures de concentration en oxygène dissous.

L'invention permet, par un fractionnement optimisé des étapes d'alimentation, d'aération et de non aération d'un cycle RBS en plusieurs phases, de créer des effets bénéfiques vis à vis d'un traitement de l'azote par shunt des nitrates :

a) « à coups » de charge ammoniacale

Dans un système à alimentation continue, par exemple selon EP 0 826 639, la concentration en substrat dans le réacteur est égale à celle mesurée en sortie de réacteur. Etant donné que la concentration ammoniacale détermine directement les cinétiques de production de nitrites, il est très difficile d'obtenir à la fois une vitesse et un rendement de conversion élevés.

Dans un RBS, le fait de fonctionner par fractions volumiques ou bachées successives permet de concentrer l'ion ammonium en début de sous-cycle et de favoriser l'action des bactéries nitritantes, en inhibant les bactéries nitratantes, et ainsi d'atteindre de fortes vitesses réactionnelles. Par contre, étant donné la forte concentration ammoniacale du milieu, il convient de fractionner ces à coups de charge pour les diluer dans le réacteur, et éviter une inhibition de la biomasse productrice de nitrites.

Le procédé de l'invention permet un fractionnement optimal de l'alimentation permettant de maximiser les vitesses de conversion de l'ammonium tout en évitant l'inhibition de la biomasse.

b) Gestion d'une aération limitée

La configuration RBS permet une rétention de biomasse. De ce fait, une sélection de la biomasse productrice de nitrites par limitation de l'âge de boues (principe du procédé de EP 0 826 639) n'est plus applicable. Le maintien d'une faible concentration en oxygène dissous dans le bassin biologique pendant la phase aérée devient nécessaire pour assurer la formation de nitrites tout en évitant la formation de nitrates.

En raison de la forte variabilité de l'effluent à traiter, il existe un risque de mauvaise adaptation des apports en oxygène, qu'il s'agisse d'un manque en quantité ou d'une distribution inappropriée de l'oxygène dans le temps au cours des séquences aérobie /anoxie.

L'invention permet un meilleur contrôle de la concentration en oxygène dissous à de faibles valeurs en limitant la durée des phases aérées et en adaptant l'apport d'oxygène à la charge à traiter.

c) Auto-régulation du pH du milieu

Le maintien du pH entre 6.5 et 8.5 permet d'éviter l'inhibition de la biomasse oxydatrice de l'ammonium. Or le procédé RBS appliqué au shunt des nitrates est susceptible d'amplifier les chocs de charge ammoniacale vis-à-vis de la biomasse oxydatrice de l'ammonium au début de chaque bachée, et indirectement de conduire à des valeurs de pH plus faibles pendant la phase aérée. En effet, des protons sont libérés lors de la production de nitrites et des ions hydroxyles sont libérés pendant la dénitritation. Leur impact sur le pH du milieu est plus fort s'ils peuvent s'accumuler lors d'une bachée.

L'invention permet une meilleure auto-régulation du pH du milieu par alternance de phases rapprochées de nitritation et de dénitritation.

d) Gestion optimisée de la phase anoxie

Le maintien de durées de non aération prolongées en conditions de faible charge peut conduire à l'établissement de conditions anaérobies, altérant le bon fonctionnement du procédé et pouvant occasionner une contamination des capteurs employés.

L'invention permet de limiter les risques d'anaérobiose par limitation de la durée des phases non aérées.

Par ailleurs, la disponibilité du carbone biodégradable pendant la phase non aérée doit être assurée pour compléter la dénitritation. Etant donné que les effluents considérés contiennent typiquement très peu de carbone biodégradable, l'étape de dénitrification requiert généralement l'ajout d'une source externe. Il est très important d'optimiser la quantité de réactif ajoutée, qui représente un des principaux postes de coût du procédé. En règle générale, un certain dosage constant est appliqué en fonction d'une charge azotée moyenne pré-établie, selon un rapport stoechiométrique théorique ou selon un ratio établi expérimentalement.

L'invention permet une optimisation de l'ajout de carbone biodégradable en adaptant l'apport de réactif à la charge à traiter.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif.

Sur ces dessins :

Fig.1 est un schéma d'une installation avec un réacteur biologique séquentiel pour la mise en oeuvre du procédé selon l'invention.

Fig.2 est un graphe illustrant la variation du niveau dans le réacteur, en fonction du temps, au cours d'un cycle de traitement.

Fig.3 illustre les phases successives d'un cycle, avec sous-cycles.

Fig.4 est un schéma synoptique de l'installation fonctionnant selon le procédé.

Fig.5 est un graphe illustrant les variations, dans le réacteur, des valeurs :

- de hauteur d'eau, exprimée en mètres (m),
- de la concentration en oxygène dissous exprimée en mg/l,
- du pH,
- de la conductivité X exprimée en mS/cm (millisiemens par centimètre)
- et la concentration en ammonium exprimée en mgN/l portés en ordonnée,

en fonction du temps en heures porté en abscisse, et

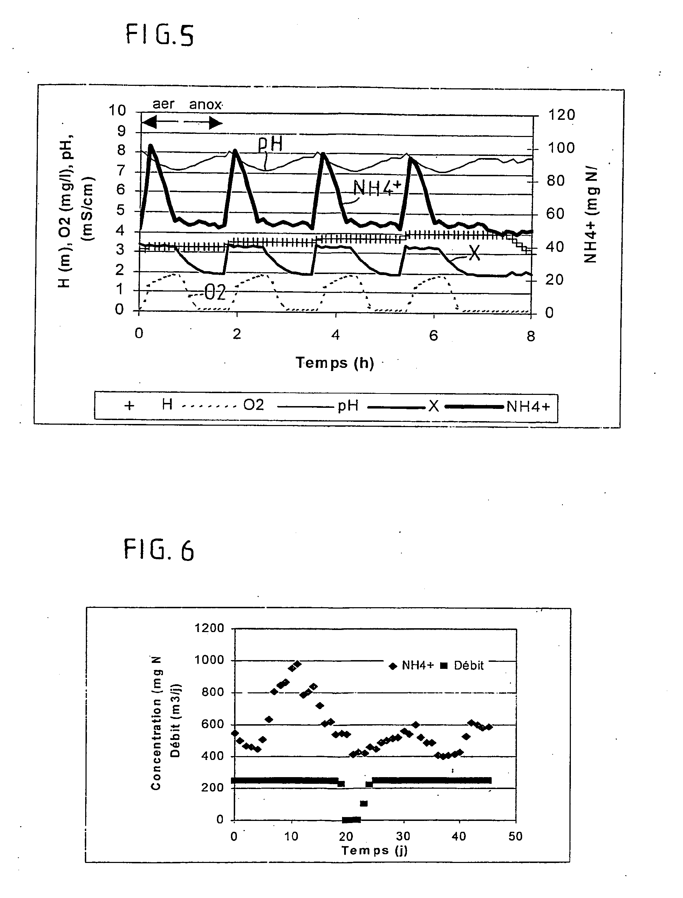

Fig.6 est un graphe illustrant les variations de concentration ammoniacale exprimée en mgN/l et de débit exprimé en $m^3/j$ ($m^3$/jour) portées en ordonnée, en fonction du temps, exprimé en jours, porté en abscisse.

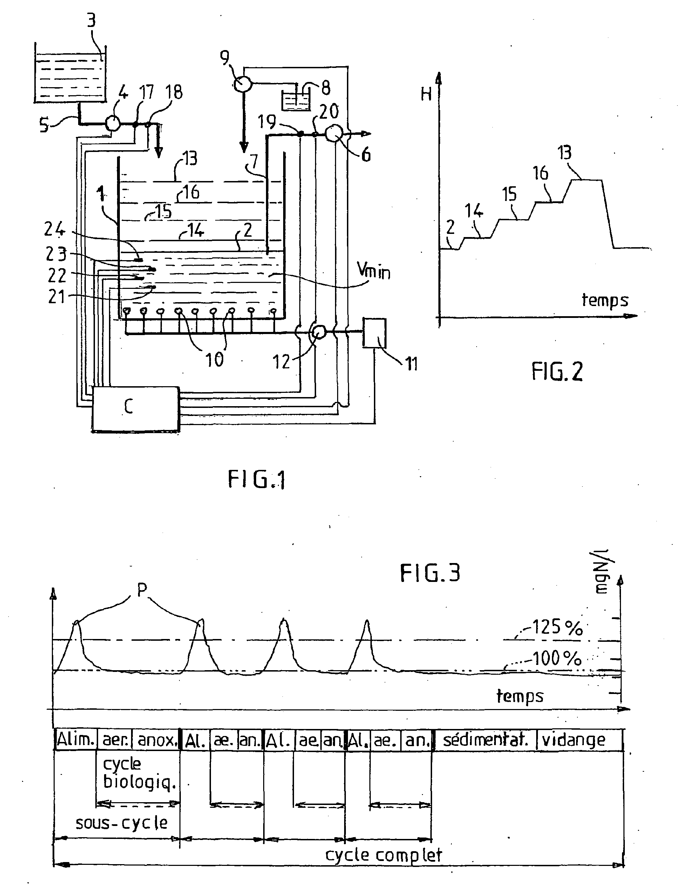

En se reportant à Fig.1 du dessin, on peut voir une installation pour le traitement d'effluents concentrés en ammonium, généralement ayant une concentration en azote supérieure à 100mgN/l (100 mg d'azote/litre). L'installation comprend un réacteur biologique séquentiel 1 qui est rempli,pour un cycle complet, par fractions volumiques ou bachées, et vidangé après traitement. Les effluents déversés dans le réacteur 1 sont également appelés « affluents ». Un volume minimal de liquide Vmin subsiste dans le réacteur 1 après vidange, le niveau de ce liquide étant schématisé par la ligne horizontale 2 sur Fig.1.

Le réacteur biologique séquentiel, en abrégé RBS, contient des bactéries nitrifiantes , comprenant des bactéries nitritantes (oxydatrices d'ammonium en nitrites) et des bactéries nitratantes (oxydatrices de nitrites en nitrates). Les conditions de fonctionnement sont prévues pour privilégier l'action des bactéries nitritantes transformant l'ammonium en nitrites et inhiber au maximum l'action des bactéries nitratantes, pour éviter la transformation des nitrites en nitrates.

Un bassin tampon 3 est prévu en amont du réacteur 1. L'alimentation du réacteur 1 en affluent à traiter est assurée par une pompe 4 montée sur une conduite 5 venant du bassin tampon 3. La vidange est assurée par exemple par une pompe 6 et une conduite 7 formant tube plongeur jusqu'au niveau 2. Une source carbonée 8, par exemple un réservoir de méthanol, est prévue pour permettre à une pompe doseuse 9 d'injecter dans le réacteur, au cours de phases d'anoxie, une dose de méthanol, ou d'une autre source carbonée. Dans le fond du réacteur 1 sont prévus des moyens d'aération 10, par exemple des tubes perforés, reliés à une source d'air sous pression, par exemple un surpresseur 11, par l'intermédiaire d'une électrovanne 12.

Au cours d'un sous-cycle de traitement, après alimentation de la fraction volumique, dans une première phase aérobie une aération du réacteur 1 est assurée par envoi d'air dans les tubes 10 et formation de bulles dans l'affluent contenu dans le réacteur pour provoquer la transformation de l'ammonium en nitrites sous l'action des bactéries nitritantes (nitritation). Dans une phase suivante d'anoxie, l'aération est arrêtée et une source carbonée, par exemple du méthanol, est introduite dans le réacteur 1 à l'aide de la pompe doseuse 9 pour la transformation des nitrites en azote. L'ensemble de la phase aérobie et de la phase anoxie constitue le cycle biologique du sous-cycle.

On désigne par « cycle complet » l'ensemble des opérations effectuées pour traiter un volume correspondant à la capacité du réacteur entre le niveau maximal 13 et le niveau minimal 2 de liquide. Au début du cycle complet le niveau est minimal, puis le réacteur est rempli jusqu'au niveau maximal 13 et, après traitement, le réacteur est vidangé jusqu'à son niveau minimal 2.

Le réacteur 1, pour un cycle complet, est alimenté par fractions volumiques successives. Le volume d'affluent de chaque fraction ne représente qu'une partie de la capacité du réacteur, de sorte que la concentration en azote de l'affluent est diluée dans le contenu du réacteur et reste acceptable pour éviter une inhibition des bactéries nitritantes par une concentration trop forte en azote. Ainsi, les fractions successives d'affluent introduites dans le réacteur feront monter le niveau de liquide par marches successives 14, 15, 16 et 13 (Fig.2), soit quatre marches dans l'exemple considéré. Si l'affluent entrant a une concentration largement supérieure à la concentration inhibitrice des bactéries nitritantes à ne pas dépasser, le fractionnement de l'alimentation provoque une dilution de la fraction versée dans le volume de liquide se trouvant déjà dans le réacteur 1, ce qui permet d'éviter le dépassement de la concentration inhibitrice.

Au début de l'injection de chaque fraction volumique d'affluent, un « à coup » ou pic P (Fig.5) de charge ammoniacale se produit, favorable au développement de la biomasse nitritante au détriment de la biomasse nitratante, et ce malgré la rétention de boues propres au réacteur 1. De préférence le pic P reste supérieur à 125% de la concentration ammoniacale caractérisant la fin du sous-cycle concerné, pendant un temps au plus égal au quart de la durée du sous-cycle..

Des sondes de mesure et des capteurs sont prévus en différents endroits de l'installation. Une sonde 17 de mesure de conductivité de l'effluent et un débitmètre 18 sont prévus sur la conduite d'arrivée de l'effluent. Les résultats de mesures sont envoyées sous forme de signaux électriques à des moyens de calcul et de commande électroniques, notamment formés par un ordinateur ou contrôleur C à microprocesseur. Ces mesures de conductivité et de débit permettent à C de déterminer la charge azotée qui rentre dans le réacteur 1 pendant un intervalle de temps donné. Une sonde 19 de mesure de conductivité et un débitmètre 20 sont prévus sur la conduite de vidange ; les résultats des mesures sont envoyés également sur le contrôleur C. Dans le liquide du réacteur 1, constituant le bassin biologique, on prévoit une sonde 21 de mesure d'oxygène dissous, une sonde 22 de mesure de potentiel redox, une sonde 23 de mesure de pH et un capteur 24 de température. Toutes ces sondes ou capteurs sont reliés au contrôleur C lequel commande la mise en marche ou arrêt des pompes 4, 6 et 9, ainsi que l'ouverture ou la fermeture de l'électrovanne 12 et le fonctionnement ou l'arrêt du surpresseur 11.

Comme illustré schématiquement par la partie inférieure de Fig.3, un cycle complet comprend plusieurs sous-cycles successifs, chaque sous-cycle comportant les étapes suivantes :

- alimentation d'une fraction volumique,
- et un cycle biologique avec
  une phase d'aération pour traitement aérobie de nitration,

et une phase d'anoxie pour transformation des nitrites en azote. Le cycle complet se termine par une étape de sédimentation, puis une vidange. Les durées des différentes phases et étapes peuvent varier.

La partie supérieure de Fig.3 illustre schématiquement les « à coups » ou pics P de charge ammoniacale [NH4+], exprimée en mgN/l, provoqués par l'alimentation en début de chaque sous-cycle. Les pics P se retrouvent de manière plus précise sur le graphe de Fig.5.

Afin d'adapter le fonctionnement du procédé à la variabilité de l'affluent à traiter, la détermination du nombre et de la durée des phases et de l'ajout de réactif carboné 8 est effectuée par le contrôleur C, selon un programme introduit dans ce contrôleur, à partir de mesures en temps réel, à trois niveaux :

1) dans l'affluent brut, pour déterminer la charge azotée entrante et affiner le nombre de sous-cycles « alimentation / aération / anoxie », le temps d'aération et l'ajout de source carbonée,
2) dans le rejet, pour déterminer le rendement de traitement et permettre un ajustement rétroactif du procédé,
3) dans le réacteur biologique, pour contrôler le bon déroulement des processus biologiques pendant les cycles aérés et non aérés.

Les différents éléments du procédé de l'invention sont détaillés dans ce qui suit.

1) Utilisation de mesures dans l'affluent à traiter

La charge azotée entrante pendant un intervalle de temps donné est déterminée grâce, par exemple, à la mesure de conductivité avec la sonde 17, et de débit avec le débitmètre 18, ou à l'utilisation de capteurs spécifiques :

- Un fractionnement optimal de l'alimentation au cours du cycle global RBS est effectué de manière à doper les cinétiques de productions de nitrites par des à coups de concentration ammoniacale, mais en évitant d'altérer l'activité bactérienne.
  Ce fractionnement est obtenu en commandant la marche ou l'arrêt de la pompe 4.
- Les besoins en oxygène journaliers sont estimés, ainsi que la durée de la phase d'aération nécessaire pour satisfaire cette demande en fonction de la puissance d'aération installée et du nombre de cycles d'aération / non aération appliqués. Le surpresseur 11 et la vanne 12 sont commandés en conséquence par C.
- Les besoins en carbone biodégradable sont calculés à partir de ratios théoriques ou expérimentaux, et le temps de fonctionnement de la pompe doseuse 9 de réactif carboné pendant la phase anoxie est fixé en conséquence. Le fonctionnement de la pompe 9 est commandé par C.

Le nombre minimal de phases d'alimentation $Nalim_{min}$ (ou nombre de fractions volumiques successives) d'un cycle complet RBS est déterminé par le contrôleur C en fonction de la charge volumique azotée à traiter (une plus forte charge entraînant un accroissement du nombre de cycles), de manière à éviter l'inhibition par la concentration ammoniacale. La formule suivante pourra être employée pour calculer le fractionnement minimal à appliquer à la charge journalière :

$$Na\lim_{min} = \frac{F_{NH4,j}}{([NH_4^+]_{inhib} - [NH_4^+]_{eff}) * V_{min} * N_{RBS}}$$

où,
$Nalim_{min}$ : nombre minimal de phases d'alimentation (ou fractions volumiques) $F_{NH4,j}$ : charge azotée journalière
$[NH_4^+]_{eff}$ : concentration en ammonium dans l'effluent sortant du réacteur
$V_{min}$ : volume liquide minimal (après vidange/extraction et avant alimentation)
$N_{RBS}$ : nombre de cycles complets RBS par jour
$[NH_4^+]_{inhib}$ : concentration en ammonium inhibitrice de la biomasse nitritante ; elle dépend du pH et de la température du milieu et de la concentration en ammoniac inhibitrice $[NH_3]_{inhib}$ de la population bactérienne présente dans le réacteur, sous la forme :

$$[NH_4^+]_{inhib} = \frac{14}{17} * \frac{[NH_3]_{inhib} * (K_w / K_b + 10^{pH})}{10^{pH}} \qquad \text{où} \quad K_w / K_b = e^{344/(273+T(°C))}$$

Des concentrations de l'ordre de 10 mg N-NH$_3$/l peuvent déjà être toxiques pour les bactéries nitritantes.

Le contrôleur C détermine un nombre minimal Nbiol$_{min}$ de sous-cycles aérobie /anoxie de manière à ne pas dépasser une durée totale de réaction biologique donnée, choisie de manière à éviter des oscillations de concentration en oxygène dissous et de pH trop importantes, ainsi que des périodes d'anoxie prolongée.

Afin de maintenir la robustesse et la régularité du traitement il convient de faire coïncider le nombre d'alimentations avec le nombre de sous-cycles aérobie /anoxie de manière à appliquer un seul sous-cycle « alimentation / aérobie /anoxie ». Le nombre NC de sous-cycles effectivement appliqué sera donc la plus forte valeur entre Nalim$_{min}$ et Nbiol$_{min}$.

Une fois défini le nombre de sous-cycles « alimentation / aérobie / anoxie », un certain nombre de sous-cycles type « aérobie / anoxie », dont les durées des phases aérées et anoxies sont fixées sont prédéfinis. La durée totale tC de ces phases de réaction sera calculée en fonction du nombre de sous-cycles NC :

$$tC = (t_{RBS} - t_{alim} - t_{sedim} - t_{extract})/NC$$

Le sous-cycle « aérobie / anoxie » effectivement appliqué sera celui dont la durée d'aération correspondra le mieux à la durée d'aération théorique calculée par le contrôleur C à partir de la charge entrante, de la configuration du système d'aération du réacteur et de la cinétique de réaction. De la même manière, un temps de fonctionnement de la pompe doseuse 9 de méthanol pourra être déterminé par C à partir des mesures de la charge azotée entrante.

Le calcul de la charge azotée moyenne est effectué sur une période pertinente, par exemple celle de la durée du cycle biologique, de la période d'alimentation, du temps de séjour hydraulique ou de la journée, car étant donné la variabilité intrinsèque aux types d'effluents traités, un pas de temps trop court conduirait à une instabilité du système et un pas de temps trop long conduirait à un niveau d'aération et/ou d'ajout de source carbonée généralement inadapté à la qualité de l'effluent à traiter.

2) Utilisation de mesures dans le rejet

Il est possible de perfectionner la conduite de l'aération en introduisant un ajustement automatique rétroactif en fonction du rendement d'élimination d'azote du traitement biologique, calculé par C à partir de mesures en ligne en entrée et en sortie du réacteur 1.

Afin d'optimiser l'ajout de réactif carboné, il est possible d'instaurer un système de rétro-ajustement automatique du temps de fonctionnement de la pompe doseuse 9 à partir de mesures en entrée (17, 18) et en sortie (19,20) du bassin biologique. Si le rendement d'élimination d'azote calculé par le contrôleur C est supérieur à un rendement minimal prédéterminé, le contrôleur C commande une diminution du temps de fonctionnement de la pompe doseuse 9 afin de réduire la quantité de réactif carboné ajoutée (initialement calculée en fonction de la charge entrante). En cas de détérioration de la qualité de l'affluent traité sortant du réacteur 1, la première action corrective commandée par le contrôleur C sera le rétablissement du temps initial de fonctionnement de la pompe doseuse 9. La périodicité de ce réajustement devrait atteindre au minimum 3 âges de boues pour ne pas introduire de perturbations trop importantes dans le système. On rappelle que l'âge de boue est le rapport entre la masse de boues présentes dans le réacteur et la masse de boues journalières extraites du réacteur.

Cette application est particulièrement utile dans le cadre du traitement des effluents concentrés en azote auxquels s'applique le procédé de l'invention, pour lesquels des processus alternatifs de dénitrification autotrophe ont pu être répertoriés, conduisant à des besoins pratiquement nuls en carbone biodégradable.

Afin de commander une action corrective appropriée, il est souvent utile de coupler cette information à celle fournie par des capteurs témoins de l'état du système dans le bassin biologique, c'est à dire dans le liquide contenu dans le réacteur 1.

3) Utilisation de mesures dans le bassin biologique

Le procédé peut utiliser l'information fournie par différents capteurs dans le bassin biologique, tels que des capteurs de conductivité 21, de concentration en oxygène dissous 22, de potentiel redox 23 et de pH 24, reliés au contrôleur C et qui vont permettre le suivi en continu de l'évolution du traitement et la commande d'actions correctives. Des capteurs de température sont prévus : on mesure la température dans le réacteur, et on assure une régulation de la température de manière à la maintenir entre 5 et 45 °C.

La durée des phases aérées et non aérées initialement définie en fonction de la charge azotée à traiter et éventuellement du rendement d'élimination de l'azote peut donc être modulée par le contrôleur C en fonction de consignes ou de seuils de conductivité, de concentration en oxygène dissous, de potentiel redox et/ou de pH. Ainsi, le fonctionnement du dispositif d'aération 10, 11 peut être :

- régulé en fonction d'une consigne en oxygène dissous et/ou de la dérivée du potentiel redox et/ou de la conductivité.
- stoppé ou relancé en fonction de seuils d'oxygène dissous et/ou de potentiel redox et/ou de pH,

le contrôleur C commandant la mise en marche ou l'arrêt du surpresseur 11, avec ouverture ou fermeture de la vanne 12.

Le choix des capteurs et du type de régulation de l'aération sera orienté en fonction des contraintes technico-économiques particulières du système.

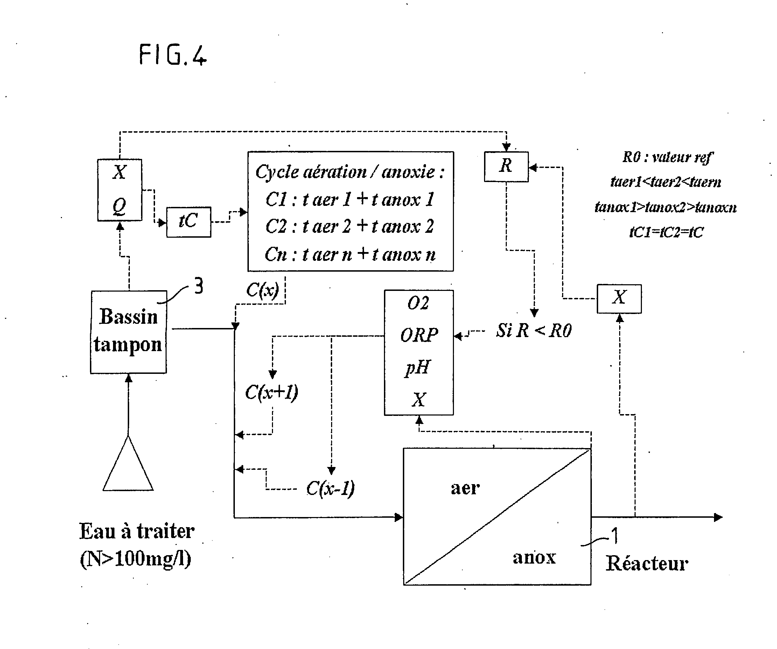

Le schéma de la figure 4 illustre un système de gestion complet basé sur des mesures de débit Q et de conductivité X en entrée et en sortie de réacteur 1 et sur des mesures de concentration en oxygène dissous 02, de pH, de potentiel redox ORP et conductivité X dans le réacteur biologique 1. La mesure de la charge en entrée de réacteur permet de définir un nombre NC de sous-cycles de durée tC, et une durée des phases aérées (t aer) et des phases non aérées (t anox). Un affinage à l'option inférieure C(x-1) ou supérieure C(x+1) est effectué en fonction des calculs de rendement (R) et des mesures en ligne dans le réacteur biologique.

### Exemple

La charge azotée moyenne d'un surnageant de centrifugation de boues digérées est de 150 kg N/j pour une concentration moyenne de 600 mg $N-NH_4^+/l$, mais variable entre 400 et 1000 $N-NH_4^+/l$. On considère également que l'alimentation est stoppée pendant trois jours suite à une panne des centrifugeuses vers le vingtième jour entraînant un débit nul (Figure 6).

Cette charge azotée est traitée dans un réacteur biologique séquentiel (RBS) de 450 $m^3$ dont la hauteur liquide varie entre 3 et 4 m, selon 3 cycles complets de 8h /j. Un fractionnement de l'alimentation minimal ($Nalim_{min}$) en 4 phases a été calculé en prenant les hypothèses suivantes : $[NH_4^+]_{eff}$ = 50 mg N/l, $[NH_3]_{inhib}$ = 10 mg $N-NH_3/l$, pH = 8.3, T = 25°C. Le temps tC biologique résultant, de 90 minutes, était cohérent avec le minimum fixé pour le système. Quatre sous-cycles « alimentation / aération / anoxie » sont donc appliqués avant les étapes de sédimentation et de soutirage afin d'éviter l'inhibition par la concentration ammoniacale aux pH les plus élevés, afin d'appliquer une durée d'aération suffisante et afin d'éviter des périodes d'anoxie prolongées. Dans cette configuration, cinq options de durées de réaction biologique (aération /anoxie) ont été définies (Tableau 1).

**Tableau 1 : Cycles complets et cycles biologiques (des sous-cycles) du réacteur RBS employé pour le traitement de l'azote d'effluents de digesteur par shunt des nitrates.**

| | |
|---|---|
| N° cyclesRBS/j | 3 |
| Durée cycle RBS | 8 h |
| Durée alimentation | 60 mn |
| Durée sédimentation | 30 mn |
| Durée extraction | 30 mn |
| N° cycles biol / cycle RBS | 4 |
| Temps biol / cycle RBS | 90 mn |

| Cycle biologique | mn / cycle | | h / j | |
|---|---|---|---|---|
| | aération | anoxie | aération | anoxie |
| Cycle 1 | 15 | 75 | 6 | 18 |
| Cycle 2 | 30 | 60 | 9 | 15 |
| Cycle 3 | 45 | 45 | 12 | 12 |
| Cycle 4 | 60 | 30 | 15 | 9 |
| Cycle 5 | 75 | 15 | 18 | 6 |

La charge azotée entrante est calculée par le contrôleur C une fois par jour à partir des moyennes des mesures de conductivité , fournies par la sonde 17, et de débit de l'alimentation fourni par le débitmètre 18. La relation conductivité/ammonium a préalablement été établie pour cet effluent. Les temps d'aération et de non aération théoriques sont calculés à partir de la charge à traiter en fonction des besoins en oxygène (par rapport à l'intermédiaire nitrite), en vérifiant que les cinétiques de réaction ne sont pas limitantes. De cette manière, la plus proche des cinq options de durées prédéfinies est appliquée. En parallèle, le temps de fonctionnement de la pompe doseuse 9 de méthanol est déterminé en fonction des besoins en carbone biodégradable (par rapport à l'intermédiaire nitrite) de la charge entrante, en vérifiant que les cinétiques ne sont pas limitantes.

La figure 5 reprend une évolution typique des paramètres de suivi et de contrôle dans le réacteur 1 pendant les quatre sous-cycles d'un cycle complet de 8h :

- Concentration en oxygène dissous
  La sonde 22 à oxygène dissous permet la régulation de l'aération entre les consignes de 1 et 2 mg $O_2$/l ; une durée de phase aérée plus longue aurait impliqué des arrêts et redémarrages plus fréquents du surpresseur 11.
  La courbe en tirets 02 de Fig.5 représente les variations de la concentration 02 qui augmente en aérobie et diminue et s'annule en anoxie.

- pH
  La courbe pH représente les variations du pH qui diminue en phase aérobie et augmente en phase anoxie. Le pH reste compris entre 6.5 et 8.5, pratiquement entre 7 et 8.
  Si l'alimentation n'était pas fractionnée, le pH serait probablement descendu, lors des phases aérobie, jusqu'à des valeurs inhibant l'activité des bactéries oxydatrices de l'ammonium.

- Conductivité
  La courbe X (conductivité) montre une baisse de conductivité pendant la phase de dénitritation anoxie comme conséquence du passage de formes ioniques azotées en azote gazeux. En fin de période, la dérivée de la conductivité tend vers zéro, reflétant une dénitrification complète.
  La courbe NH4$^+$ fait apparaître les pics P de concentration ammoniacale, ou « à coups de charge » ammoniacale, en début d'alimentation de chaque fraction volumique, en correspondance avec les marches de la courbe H de hauteur d'eau. Les pics P atteignent 100 mgN/l et ne restent supérieurs à 65 mgN/l (125% des 52 mg N/l mesurés en fin du sous-cycle) que pendant un intervalle de temps inférieur au quart de la durée du sous-cycle.

L'élimination de l'azote ammoniacal du système se déroule par shunt des nitrates, avec une oxydation de l'ammonium en nitrites pendant la phase aérée et une réduction des nitrites en azote gazeux pendant la phase anoxie grâce au méthanol ajouté. La pression exercée par les « à coups de charge » ammoniacaux au début de chaque sous-cycle biologique, unie au maintien de faibles concentrations en oxygène dissous pendant la phase aérée, permet de développer sélectivement la biomasse nitritante au détriment de la biomasse nitratante, et ce malgré la rétention de boues propre au réacteur RBS.

La mesure de conductivité en fin de traitement, par la sonde 19, permet une évaluation régulière du rendement d'élimination de l'azote, et sert d'alarme pour corriger d'éventuelles dérives du système. Ainsi, un rendement minimal de 80% étant fixé, celui-ci est descendu à 70 % alors que le cycle biologique n°2 était appliqué. Le contrôleur C a vérifié que la concentration en oxygène dissous n'avait pas dépassé 1 mg/l pendant les phases aérées de la journée, reflétant une oxydation incomplète de la charge ammoniacale, et le cycle n°3, comportant une phase aérée plus longue, a été commandé. La mesure de conductivité, par le capteur 21, dans le réacteur biologique peut également s'avérer utile. Ainsi, quelques jours plus tard une nouvelle baisse de rendement a été observée alors que la dérivée de la mesure de conductivité pendant les phases anoxies ne tendait pas vers 0, reflétant une dénitrification incomplète. L'action subséquente a été d'appliquer le cycle n°2.

Une boucle de ré-ajustement de l'ajout de méthanol ajouté a finalement été instaurée, de manière à réduire tous les 15 jours le temps de fonctionnement de la pompe doseuse 9. En cas de baisse du rendement d'élimination de l'azote en dessous de la valeur minimale fixée, le temps de fonctionnement de la pompe 9 a été rétabli à la valeur précédente.

Le procédé de l'invention permet de réaliser des économies considérables par rapport à l'énergie d'aération (25%), à l'ajout de réactif carboné (40% minimum) et à la production de boues (environ 30%), tout en apportant en permanence des quantités d'air et de carbone suffisantes pour traiter la charge polluante dans un réacteur biologique séquentiel. Cette configuration permet d'appliquer des charges volumiques supérieures à celles d'autres réacteurs à alimentation continue décrits antérieurement pour un traitement de l'azote par shunt des nitrates.

**Revendications**

1. Procédé de traitement d'effluents concentrés en azote, mettant en oeuvre une oxydation d'ammonium en nitrites suivie d'une dénitritation des nitrites en azote gazeux dans un réacteur biologique séquentiel dont les phases de réaction sont fractionnées, ce réacteur contenant des bactéries nitrifiantes , les conditions de fonctionnement étant prévues pour éviter une inhibition des bactéries nitritantes par une concentration trop forte en azote, et inhiber au maximum l'action des bactéries nitratantes, procédé selon lequel un volume d'affluent à traiter dans un cycle complet est versé dans le réacteur par fractions volumiques successives, le cycle complet de traitement étant divisé en sous-cycles successifs, chaque sous-cycle comprenant une phase d'alimentation par une fraction volumique, puis une phase d'aération pour provoquer la nitritation, puis une phase d'anoxie pendant laquelle l'aération est arrêtée et une source carbonée est introduite dans le réacteur pour la transformation des nitrites en azote,
**caractérisé en ce que** l'on effectue une série de mesures en temps réel dans l'effluent à traiter, dans le rejet et dans le réacteur biologique, que les résultats des mesures sont envoyés à un moyen de calcul et de commande (C), en particulier un contrôleur, qui, selon un programme, évalue la charge volumique azotée à traiter dans l'affluent, et détermine le nombre minimal de phases d'alimentation d'un cycle complet en fonction de cette charge azotée et du volume minimal de liquide dans le réacteur, selon la formule suivante :

$$Na\lim{}_{min} = \frac{F_{NH4,j}}{([NH_4^+]_{inhib} - [NH_4^+]_{eff}) * V_{min} * N_{RBS}}$$

où,
$Na\lim{}_{min}$ : nombre minimal de phases d'alimentation
$F_{NH4,j}$ : charge azotée journalière.
$[NH_4^+]_{eff}$ : concentration en ammonium dans l'effluent sortant du réacteur
$V_{min}$ : volume liquide minimal (après extraction et avant alimentation)
$N_{RBS}$ : nombre de cycles complets RBS par jour
$[NH_4^+]_{inhib}$ : concentration en ammonium inhibitrice de la biomasse nitritante ,
de sorte que la concentration en azote de la fraction volumique injectée est diluée dans le volume de liquide demeurant dans le réacteur, ce qui permet d'éviter l'inhibition des bactéries nitritantes, la charge azotée de la fraction volumique étant cependant suffisante pour assurer dans le réacteur un « à coup » ou pic (P) de charge ammoniacale au déversement de chaque fraction, favorable au développement de la biomasse productrice de nitrites.

2. Procédé selon la revendication 1, **caractérisé en ce que** l'on évalue la charge volumique azotée à traiter dans l'affluent par mesure de la conductivité (X) et du débit (Q) de l'affluent.

3. Procédé selon la revendication 1 ou 2, **caractérisé en ce que** la charge azotée de la fraction volumique injectée est suffisante pour assurer, au déversement de cette fraction dans le réacteur, un pic (P) de charge ammoniacale, qui est et reste supérieur à 125% de la concentration ammoniacale caractérisant la fin du sous-cycle concerné, pendant un temps au plus égal au quart de la durée du sous-cycle .

4. Procédé selon l'une des revendications précédentes , **caractérisé en ce que** l'on mesure et contrôle la concentration en oxygène dissous dans le réacteur pour la maintenir à des valeurs entre 0 et 2mg $O_2$/l en limitant la durée des phases aérées et en adaptant l'apport d'oxygène à la charge à traiter.

5. Procédé selon la revendication 4, **caractérisé en ce que** les oscillations de concentration en oxygène dissous sont limitées entre 0 et 2mg O2/l par un nombre minimal $Nbiol_{min}$ de sous-cycles aérobie / anoxie.

6. Procédé selon la revendication 5, **caractérisé en ce que** le nombre (NC) de sous-cycles effectivement appliqué est la plus forte valeur entre $Nalim_{min}$ et $Nbiol_{min}$.

7. Procédé selon l'une des revendications précédentes, **caractérisé en ce que** l'on mesure le pH dans le réacteur et on assure une alternance de phases rapprochées de nitritation et de dénitritation en limitant les oscillations de pH entre 6.5 et 8.5, de préférence entre 7 et 8.

8. Procédé selon l'une des revendications précédentes, **caractérisé en ce que** l'on mesure la température dans le réacteur, et on assure une régulation de la température de manière à la maintenir entre 5 et 45 °C.

9. Procédé selon l'une des revendications précédentes, **caractérisé en ce que** des cycles biologiques type « aérobie / anoxie », avec des durées des phases aérées et anoxies fixées sont prédéfinis, et la durée totale tC de ces phases de réaction est calculée en fonction du nombre de cycles NC :

$$tC = (t_{RBS} - t_{alim} - t_{sedim} - t_{extract})/NC$$

où,

$t_{RBS}$ : durée du cycle RBS global

$t_{alim}$ : durée globale de l'alimentation (non fractionnée)

$t_{sedim}$ : durée de la phase de sedimentation

$t_{extract}$ : durée de la phase d'extraction

**10.** Procédé selon l'une des revendications précédentes , **caractérisé en ce que** le temps d'injection de la source carbonée pendant la phase non aérée est déterminé à partir des mesures de la charge azotée entrante.

**11.** Procédé selon l'une des revendications précédentes, **caractérisé en ce qu'**il est appliqué au traitement de surnageants de digesteurs anaérobies.

**12.** Procédé selon l'une des revendications 1 à 10, **caractérisé en ce qu'**il est appliqué au traitement de condensats de traitement de gaz.

**13.** Procédé selon l'une des revendications 1 à 10, **caractérisé en ce qu'**il est appliqué au traitement de lixiviats de décharge.

**14.** Installation de traitement d'effluents concentrés en azote, en particulier contenant plus de 100mg N/l, mettant en oeuvre une oxydation d'ammonium en nitrites suivie d'une dénitritation des nitrites en azote gazeux dans un réacteur biologique séquentiel (1) dont les phases de réaction sont fractionnées, ce réacteur contenant des bactéries nitrifiantes, les conditions de fonctionnement étant prévues pour éviter une inhibition des bactéries nitritantes par une concentration trop forte en azote et inhiber au maximum l'action des bactéries nitratantes, un volume d'affluent à traiter dans un cycle complet étant versé dans le réacteur par fractions volumiques successives, le cycle complet de traitement étant divisé en sous-cycles successifs, chaque sous-cycle comprenant une phase d'alimentation par une fraction volumique, puis une phase d'aération pour provoquer la nitration, puis une phase d'anoxie pendant laquelle l'aération est arrêtée et une source carbonée est introduite dans le réacteur pour la transformation des nitrites en azote,
**caractérisée en ce qu'**elle comporte des moyens de mesure (17, 18), notamment une sonde (17) de mesure de la conductivité (X) et un débitmètre (18) pour mesure du débit (Q) de l'affluent, pour effectuer une série de mesures en temps réel dans l'effluent à traiter, dans le rejet et dans le réacteur biologique, ces moyens de mesure étant reliés à un moyen de calcul et de commande (C), en particulier un contrôleur, qui, selon un programme, évalue la charge volumique azotée à traiter dans l'affluent, et détermine le nombre de phases d'alimentation d'un cycle complet en fonction de cette charge azotée et du volume minimal de liquide dans le réacteur, selon la formule suivante :

$$Na\lim_{min} = \frac{F_{NH4,j}}{([NH_4^+]_{inhib} - [NH_4^+]_{eff}) * V_{min} * N_{RBS}}$$

où,

$Na\lim_{min}$ : nombre minimal de phases d'alimentation

$F_{NH4,j}$ : charge azotée journalière

$[NH_4^+]_{eff}$ : concentration en ammonium dans l'effluent sortant du réacteur

$V_{min}$ : volume liquide minimal (après extraction et avant alimentation)

$N_{min}$ : nombre de cycles complets RBS par jour

$[NH_4^+]_{inhib}$ : concentration en ammonium inhibitrice de la biomasse nitritante ,

de sorte que la concentration en azote de la fraction volumique injectée est diluée dans le volume de liquide demeurant dans le réacteur, ce qui permet d'éviter l'inhibition des bactéries nitritantes, la charge azotée de la fraction volumique étant cependant suffisante pour assurer dans le réacteur un « à coup » ou pic (P) de charge ammoniacale au déversement de chaque fraction, favorable au développement de la biomasse productrice de nitrites.

**15.** Installation selon la revendication 14, **caractérisée en ce qu'**elle comprend une sonde de mesure de conductivité (19) et un débitmètre (20) dans l'effluent sortant, et différents capteurs dans le réacteur (1), en particulier des capteurs de conductivité (21), de concentration en oxygène dissous (22), de potentiel redox (23) et de pH (24), toutes ces sondes et capteurs étant reliés au contrôleur (C) pour permettre un suivi en continu de l'évolution du traitement et la commande d'actions correctives.

**16.** Installation selon la revendication 14 ou 15, **caractérisée en ce qu'**elle comprend une source carbonée (8) et une pompe doseuse (9) commandée par le contrôleur (C) pour le temps d'injection de la source carbonée pendant une phase d'anoxie, ce temps d'injection étant déterminé à partir des mesures de la charge azotée entrante.

**17.** Installation selon l'une des revendications 14 à 16, **caractérisée en ce qu'**elle comprend des moyens d'aération (10,11,12) commandés par un contrôleur (C) selon les mesures de concentration en oxygène dissous.

**Claims**

**1.** A method of treating nitrogen-concentrated effluents, employing an oxidation of ammonium into nitrites followed by a denitritation of the nitrites into nitrogen gas in a sequential biological reactor, the reaction stages of which are split up, this reactor containing nitrifying bacteria, the operating conditions being provided to prevent an inhibition of the nitriting bacteria by an excessively high nitrogen concentration, and inhibit as far as possible the action of the nitrating bacteria, a method according to which a volume of influent to be treated in a complete cycle is poured into the reactor by successive volume fractions, the complete cycle of treatment being divided into successive sub-cycles, each sub-cycle comprising a stage of supply by a volume fraction, then an aeration stage in order to cause nitritation, then an anoxia stage during which the aeration is stopped and a carbon-containing source is introduced into the reactor to convert the nitrites into nitrogen,
**characterised in that** a series of measurements are carried out in real time in the effluent to be treated, in the rejects and in the biological reactor, the results of the measurements are sent to a calculating and control means (C), in particular a controller, which, in accordance with a grogram, evaluates the nitrogenous volume load to be treated in the influent, and determines the minimum number of supply stages in a complete cycle as a function of this nitrogenous load and the minimum volume of liquid in the reactor, according to the following formula:

$$\mathrm{N}supply_{\min} = \frac{F_{NH4,j}}{([NH_4^+]_{inhib} - [NH_4^+]_{eff}) * V_{\min} * N_{\mathrm{SBR}}}$$

where,
$Nsupply_{min}$: minimum number of supply stages
$F_{NH4,j}$: daily nitrogenous load
$[NH_4^+]_{eff}$: ammonium concentration in the effluent leaving the reactor
$V_{min}$: minimum liquid volume (after extraction and before supply)
$N_{SBR}$: number of complete SBR cycles per day
$[NH_4^+]_{inhib}$: concentration of ammonium inhibiting the nitriting biomass,
such that the nitrogen concentration of the injected volume fraction is diluted in the volume of liquid remaining in the reactor, which prevents the inhibition of the nitriting bacteria, the nitrogenous load of the volume fraction being however sufficient to provide in the reactor a "shot" or peak (P) of ammoniacal load when each fraction is poured, favourable to the development of the nitrite-producing biomass.

**2.** The method according to claim 1, **characterised in that** the nitrogenous volume load to be treated in the influent is evaluated by measuring the conductivity (X) and the flow rate (Q) of the influent.

**3.** The method according to claim 1 or 2, **characterised in that** the nitrogenous load of the injected volume fraction is sufficient to provide, when this fraction is poured into the reactor, an ammoniacal load peak (P) which is and remains greater than 125% of the ammoniacal concentration characterising the end of the sub-cycle concerned, for a time at most equal to one quarter of the duration of the sub-cycle.

**4.** The method according to one of the preceding claims, **characterised in that** the concentration of dissolved oxygen in the reactor is measured and controlled so as to maintain it at values between 0 and 2mg $O_2$/l by limiting the duration of the aerated stages and adapting the feed of oxygen to the load to be treated.

5. The method according to claim 4, **characterised in that** the oscillations in dissolved oxygen concentration are limited between 0 and 2mg $O_2$/l by a minimum number $Nbiol_{min}$ of aerobic/anoxic sub-cycles.

6. The method according to claim 5, **characterised in that** the number (NC) of sub-cycles actually applied is the higher value between $Nsupply_{min}$ and $Nbiol_{min}$.

7. The method according to one of the preceding claims, **characterised in that** the pH in the reactor is measured and there is alternation of close stages of nitritation and denitritation by limiting the pH oscillations between 6.5 and 8.5, preferably between 7 and 8.

8. The method according to one of the preceding claims, **characterised in that** the temperature in the reactor is measured, and the temperature is regulated so as to maintain it between 5 and 45°C,

9. The method according to one of the preceding claims, **characterised in that** biological cycles of the "aerobic/anoxic" type, with fixed durations of the aerated and anoxic stages, are predefined, and the total duration tC of these reaction stages is calculated according to the number of cycles NC:

$$tC = (t_{SBR} - t_{supply} - t_{sedim} - t_{extract})/NC$$

where,
$t_{SBR}$: duration of the total SBR cycle
$t_{supply}$: total duration of the supply (not split up)
$t_{sedim}$: duration of the sedimentation stage
$t_{extract}$: duration of the extraction stage

10. The method according to one of the preceding claims, **characterised in that** the carbon-containing source injection time during the non-aerated stage is determined from the measurements of the incoming nitrogenous load.

11. The method according to one of the preceding claims, **characterised in that** it is applied to the treatment of supernatants of anaerobic digesters.

12. The method according to one of claims 1 to 10, **characterised in that** it is applied to the treatment of gas treatment condensates.

13. The method according to one of claims 1 to 10, **characterised in that** it is applied to the treatment of landfill leachates.

14. An installation for treating nitrogen-concentrated effluents, in particular containing more than 100mg NIL, employing an oxidation of ammonium into nitrites followed by a denitritation of the nitrites into nitrogen gas in a sequential biological reactor, the reaction stages of which are split up, this reactor containing nitrifying bacteria, the operating conditions being provided to prevent an inhibition of the nitriting bacteria by an excessively high nitrogen concentration, and inhibit as far as possible the action of the nitrating bacteria, a volume of influent to be treated in a complete cycle being poured into the reactor by successive volume fractions, the complete cycle of treatment being divided into successive sub-cycles, each sub-cycle comprising a stage of supply by a volume fraction, then an aeration stage in order to cause nitritation, then an anoxia stage during which the aeration is stopped and a carbon-containing source is introduced into the reactor to convert the nitrites into nitrogen,
**characterised in that** it comprises measuring means (17,18), specifically a probe (17) for measuring the conductivity (X) and a flow meter (18) for measuring the flow (Q) of the influent, to carry out a series of measurements in real time in the effluent to be treated, in the rejects and in the biological reactor, these measuring means being connected to a calculating and control means (C), in particular a controller, which, in accordance with a program, evaluates the nitrogenous volume load to be treated in the influent, and determines the number of supply stages in a complete cycle as a function of this nitrogenous load and the minimum volume of liquid in the reactor, according to the following formula:

$$Nsupply_{min} = \frac{F_{NH4,j}}{([NH_4^+]_{inhib} - [NH_4^+]_{eff}) * V_{min} * N_{SBR}}$$

where,

$N_{supply\,min}$: minimum number of supply stages

$F_{NH4,j}$: daily nitrogenous load

$[NH_4^+]_{eff}$: ammonium concentration in the effluent leaving the reactor

$V_{min}$: minimum liquid volume (after extraction and before supply)

$N_{SBR}$: number of complete SBR cycles per day

$[NH_4^+]_{inhib}$: concentration of ammonium inhibiting the nitriting biomass,

such that the nitrogen concentration of the injected volume fraction is diluted in the volume of liquid remaining in the reactor, which prevents the inhibition of the nitriting bacteria, the nitrogenous load of the volume fraction being however sufficient to provide in the reactor a "shot" or peak (P) of ammoniacal load when each fraction is poured, favourable to the development of the nitrite-producing biomass.

15. The installation according to claim 14, **characterised in that** it comprises a conductivity measuring probe (19) and a flow meter (20) in the outgoing effluent, and various sensors in the reactor (1), in particular sensors for conductivity (21), for concentration of dissolved oxygen (22), for redox potential (23) and for pH (24), all these probes and sensors being connected to the controller (C) to allow the continuous monitoring of the progression of the treatment and the control of corrective actions.

16. The installation according to claim 14 or 15, **characterised in that** it comprises a carbon-containing source (8) and a dosing pump (9) controlled by the controller (C) for the carbon-containing source injection time during an anoxia stage, this injection time being determined from the measurements of the incoming nitrogenous load.

17. The installation according to one of claims 14 to 16, **characterised in that** it comprises aeration means (10, 11, 12) controlled by a controller (C) according to the measurements of dissolved oxygen concentration.

## Patentansprüche

1. Verfahren zur Behandlung von an Stickstoff konzentrierten Abwässern, bei dem eine Oxidation des Ammoniums zu Nitriten und anschließend eine Denitritation der Nitrite zu gasförmigem Stickstoff in einem sequentiellen Bioreaktor, dessen Reaktionsphasen fraktioniert sind, durchgeführt wird, wobei dieser Reaktor nitrifizierende Bakterien enthält, wobei die Betriebsbedingungen vorgesehen sind, um ein Inhibieren der nitritierenden Bakterien durch eine zu hohe Stickstoffkonzentration zu vermeiden und um die Tätigkeit der nitratisierenden Bakterien maximal zu inhibieren, Verfahren, wonach ein Zuflussvolumen, das in einem vollständigen Zyklus zu behandeln ist, in aufeinander folgenden Volumenfraktionen in den Reaktor geleitet wird, wobei der vollständige Behandlungszyklus in aufeinander folgende Unterzyklen unterteilt ist, wobei jeder Unterzyklus eine Phase zur Versorgung mit einer Volumenfraktion, anschließend eine Belüftungsphase, um die Nitritation auszulösen, danach eine Anoxiephase, während welcher die Belüftung unterbrochen und eine Kohlenstoffquelle in den Reaktor geleitet wird, um die Nitrite in Stickstoff umzuwandeln, umfasst, **dadurch gekennzeichnet, dass** in dem zu behandelnden Abwasser, dem Abfluss und dem Bioreaktor eine Messreihe in Echtzeit durchgeführt wird, dass die Ergebnisse der Messungen an ein Rechen- und Steuermittel (C), insbesondere einen Controller, gesandt werden, der entsprechend einem Programm die zu behandelnde Stickstoffvolumenlast im Zufluss bemisst und die Mindestanzahl der Zufuhrphasen eines vollständigen Zyklus in Abhängigkeit von dieser Stickstofflast und dem Mindestflüssigkeitsvolumen in dem Reaktor gemäß folgender Formel bestimmt:

$$Na\lim_{min} = \frac{F_{NH4,j}}{([NH_4^+]_{inhib} - [NH_4^+]_{eff}) * V_{min} * N_{RBS}}\,,$$

worin:

- $Na\lim_{min}$: Mindestzahl der Zufuhrphasen,

- $F_{NH4,j}$: tägliche Stickstofflast,
- $[NH_4^+]_{eff}$: Ammoniumkonzentration in dem den Reaktor verlassenden Abwasser,
- $V_{min}$: Mindestflüssigkeitsvolumen (nach der Entnahme und vor der Zufuhr),
- $N_{RBS}$: Anzahl der vollständigen RBS-Zyklen pro Tag,
- $[NH_4^+]_{inhib}$: inhibierende Ammoniumkonzentration der nitritierenden Biomasse,

so dass die Stickstoffkonzentration der eingeleiteten Volumenfraktion in dem in dem Reaktor verbleibenden Flüssigkeitsvolumen verdünnt wird, was erlaubt, die Inhibition der nitritierenden Bakterien zu vermeiden, wobei die Stickstofflast der Volumenfraktion jedoch ausreichend ist, um in dem Reaktor beim Ableiten jeder Fraktion einen "Sprung" oder eine Spitze (P) der Ammoniakbelastung, der/die für die Entwicklung der Nitrite erzeugenden Biomasse vorteilhaft ist, sicherzustellen.

2. Verfahren nach Anspruch 1, **dadurch gekennzeichnet, dass** die zu behandelnde Stickstoffvolumenlast im Zufluss durch Messung der Leitfähigkeit (X) und des Durchflusses (Q) des Zuflusses bemessen wird.

3. Verfahren nach Anspruch 1 oder 2, **dadurch gekennzeichnet, dass** die Stickstofflast der eingeleiteten Volumenfraktion ausreichend ist, um beim Ableiten dieser Fraktion in den Reaktor eine Spitze (P) der Ammoniaklast sicherzustellen, die über einen Zeitraum, der höchstens gleich dem Viertel der Dauer des Unterzyklus ist, größer als 125 % der Ammoniakkonzentration, die das Ende des betroffenen Unterzyklus charakterisiert, ist und bleibt.

4. Verfahren nach einem der vorhergehenden Ansprüche, **dadurch gekennzeichnet, dass** die Konzentration des gelösten Sauerstoffs im Reaktor gemessen und kontrolliert wird, um sie auf Werten zwischen 0 und 2 mg $O_2$/l zu halten, indem die Dauer der belüfteten Phasen begrenzt und die Sauerstoffzufuhr an die zu behandelnde Last angepasst wird.

5. Verfahren nach Anspruch 4, **dadurch gekennzeichnet, dass** die Konzentrationsschwankungen des gelösten Sauerstoffs auf zwischen 0 und 2 mg $O_2$/l durch eine minimale Anzahl $Nbiol_{min}$ von aeroben/anoxischen Unterzyklen begrenzt werden.

6. Verfahren nach Anspruch 5, **dadurch gekennzeichnet, dass** die tatsächlich durchgeführte Anzahl (NC) von Unterzyklen der größte Wert zwischen $Nalim_{min}$ und $Nbiol_{min}$ ist.

7. Verfahren nach einem der vorhergehenden Ansprüche, **dadurch gekennzeichnet, dass** der pH-Wert in dem Reaktor gemessen und ein Abwechseln von einander genäherten Nitritations- und Denitritationsphasen sichergestellt wird, indem die Schwankungen des pH-Wertes auf zwischen 6,5 und 8,5, vorzugsweise zwischen 7 und 8 begrenzt werden.

8. Verfahren nach einem der vorhergehenden Ansprüche, **dadurch gekennzeichnet, dass** die Temperatur in dem Reaktor gemessen und eine Regelung der Temperatur derart durchgeführt wird, dass sie zwischen 5 und 45 °C gehalten wird.

9. Verfahren nach einem der vorhergehenden Ansprüche, **dadurch gekennzeichnet, dass** "aerobe/anoxische" biologische Zyklen mit einer festgelegten Dauer der belüfteten und anoxischen Phasen vorher festgelegt werden und die Gesamtdauer tC dieser Reaktionsphasen in Abhängigkeit von der Zyklenzahl NC berechnet wird:

$$tC = (t_{RBS} - t_{alim} - t_{sedim} - t_{extract})/NC,$$

worin:

- $t_{RBS}$: Dauer des gesamten RBS-Zyklus,
- $t_{alim}$: Gesamtdauer der (nicht fraktionierten) Zufuhr,
- $t_{sedim}$: Dauer der Sedimentationsphase,
- $t_{extrakt}$: Dauer der Entnahmephase.

10. Verfahren nach einem der vorhergehenden Ansprüche, **dadurch gekennzeichnet, dass** die Zeit der Einleitung der Kohlenstoffquelle während der unbelüfteten Phase aus den Messungen der eingetragenen Stickstofflast ermittelt wird.

11. Verfahren nach einem der vorhergehenden Ansprüche, **dadurch gekennzeichnet, dass** es auf die Behandlung von Überständen anaerober Faulbehälter angewendet wird.

12. Verfahren nach einem der Ansprüche 1 bis 10, **dadurch gekennzeichnet, dass** es auf die Behandlung von Kondensaten einer Gasbehandlung angewendet wird.

13. Verfahren nach einem der Ansprüche 1 bis 10, **dadurch gekennzeichnet, dass** es auf die Behandlung von Deponiesickerwasser angewendet wird.

14. Anlage zur Behandlung von an Stickstoff konzentrierten Abwässern, die insbesondere mehr als 100 mg N/l enthalten, in welcher eine Oxidation des Ammoniums zu Nitriten und anschließend eine Denitritation der Nitrite zu gasförmigem Stickstoff in einem sequentiellen Bioreaktor (1), dessen Reaktionsphasen fraktioniert sind, durchgeführt wird, wobei dieser Reaktor nitrifizierende Bakterien enthält, wobei die Betriebsbedingungen vorgesehen sind, um ein Inhibieren der nitritierenden Bakterien durch eine zu hohe Stickstoffkonzentration zu vermeiden und um die Tätigkeit der nitratisierenden Bakterien maximal zu inhibieren, wobei ein Zuflussvolumen, das in einem vollständigen Zyklus zu behandeln ist, in aufeinander folgenden Volumenfraktionen in den Reaktor geleitet wird, wobei der vollständige Behandlungszyklus in aufeinander folgende Unterzyklen unterteilt ist, wobei jeder Unterzyklus eine Phase zur Versorgung mit einer Volumenfraktion, anschließend eine Belüftungsphase, um die Nitritation auszulösen, danach eine Anoxiephase, während welcher die Belüftung unterbrochen und eine Kohlenstoffquelle in den Reaktor geleitet wird, um die Nitrite in Stickstoff umzuwandeln, umfasst, **dadurch gekennzeichnet, dass** sie Messmittel (17, 18), insbesondere eine Sonde (17) zur Messung der Leitfähigkeit (X) und ein Durchflussmesser (18) zur Messung des Durchflusses (Q) des Zuflusses umfasst, um eine Messreihe in Echtzeit in dem zu behandelnden Abwasser, dem Abfluss und dem Bioreaktor durchzuführen, wobei diese Messmittel mit einem Rechen- und Steuermittel (C), insbesondere einem Controller, verbunden sind, der entsprechend einem Programm die zu behandelnde Stickstoffvolumenlast im Zufluss bemisst und die Anzahl der Zufuhrphasen eines vollständigen Zyklus in Abhängigkeit von dieser Stickstofflast und dem Mindestflüssigkeitsvolumen in dem Reaktor gemäß folgender Formel bestimmt:

$$Na\lim_{min} = \frac{F_{NH4,j}}{([NH_4^+]_{inhib} - [NH_4^+]_{eff}) * V_{min} * N_{RBS}},$$

worin:

- $Na\lim_{min}$: Mindestzahl der Zufuhrphasen,
- $F_{NH4,j}$: tägliche Stickstofflast,
- $[NH_4^+]_{eff}$: Ammoniumkonzentration in dem den Reaktor verlassenden Abwasser,
- $V_{min}$: Mindestflüssigkeitsvolumen (nach der Entnahme und vor der Zufuhr),
- $N_{RBS}$: Anzahl der vollständigen RBS-Zyklen pro Tag,
- $[NH_4^+]_{inhib}$: inhibierende Ammoniumkonzentration der nitritierenden Biomasse,

so dass die Stickstoffkonzentration der eingeleiteten Volumenfraktion in dem in dem Reaktor verbleibenden Flüssigkeitsvolumen verdünnt wird, was erlaubt, die Inhibition der nitritierenden Bakterien zu vermeiden, wobei die Stickstofflast der Volumenfraktion jedoch ausreichend ist, um in dem Reaktor beim Ableiten jeder Fraktion einen "Sprung" oder eine Spitze (P) der Ammoniakbelastung, der/die für die Entwicklung der Nitrite erzeugenden Biomasse vorteilhaft ist, sicherzustellen.

15. Anlage nach Anspruch 14, **dadurch gekennzeichnet, dass** sie eine Sonde (19) zur Messung der Leitfähigkeit und einen Durchflussmesser (20) in dem abfließenden Abwasser und verschiedene Sensoren in dem Reaktor (1), insbesondere Sensoren für die Leitfähigkeit (21), die Konzentration (22) des gelösten Sauerstoffs, das Redoxpotential (23) und den pH-Wert (24) umfasst, wobei alle diese Sonden und Sensoren mit dem Controller (C) verbunden sind, um ein kontinuierliches Verfolgen der Entwicklung der Behandlung und die Steuerung korrigierender Tätigkeiten zu erlauben.

16. Anlage nach Anspruch 14 oder 15, **dadurch gekennzeichnet, dass** sie eine Kohlenstoffquelle (8) und eine durch den Controller (C) gesteuerte Dosierpumpe (9) für den Zeitraum des Einleitens der Kohlenstoffquelle während einer anoxischen Phase umfasst, wobei dieser Einleitungszeitraum aus den Messungen der zugeführten Stickstofflast ermittelt wird.

17. Anlage nach einem der Ansprüche 14 bis 16, **dadurch gekennzeichnet, dass** sie Belüftungsmittel (10, 11, 12) umfasst, die durch einen Controller (C) entsprechend den Messungen der Konzentration des gelösten Sauerstoffs gesteuert werden.

FIG.1

FIG.2

FIG.3

| Alim. | aer. | anox. | Al. | æ. | an. | Al. | ae. | an. | Al. | ae. | an. | sédimentat. | vidange |
|-------|------|-------|-----|-----|-----|-----|-----|-----|-----|-----|-----|-------------|---------|

cycle biologiq.

sous-cycle

cycle complet

## FIG.4

EP 1 910 233 B1

## FIG. 5

## FIG. 6

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 826639 A
- WO 0005176 A

- EP 0826639 A

**Littérature non-brevet citée dans la description**

- **FUX, C. ; LANGE K. ; FAESSLER, A. ; HUBER, P. ; GRUENIGER, B. ; SIEGRIST, H.** Nitrogen removal from digester supernatant via nitrite-SBR or SHARON?. *Water Science and Technology,* 2003, vol. 48 (8), 9-18